# FASCICULE DE BREVET EUROPEEN

(11) **EP 3 312 539 B1**
(45) Date de publication et mention de la délivrance du brevet: **19.06.2019**
(21) Numéro de dépôt: 17196630.2
(22) Date de dépôt: 16.10.2017
(51) Int. Cl.: F28D 20/02

(54) **SYSTÈME DE STOCKAGE THERMIQUE PAR MCP ET COMPRENANT UN DISPOSITIF DE MESURE D'UN PARAMÈTRE REPRÉSENTATIF DU TAUX DE CHARGE**
THERMISCHES MCP-SPEICHERSYSTEM, DAS EINE MESSVORRICHTUNG EINES REPRÄSENTATIVEN PARAMETERS DES LADUNGSNIVEAUS UMFASST
SYSTEM FOR THERMAL STORAGE BY PCM, COMPRISING A DEVICE FOR MEASURING A PARAMETER REPRESENTING THE CHARGE RATE

(30) Priorité: 18.10.2016 FR 1660064
(43) Date de publication de la demande: 25.04.2018
(73) Titulaire: Commissariat à l'Energie Atomique et aux Energies Alternatives, 75015 Paris (FR)
(72) Inventeur: VESIN, Sébastien, 38100 GRENOBLE (FR)
(74) Mandataire: Bronchart, Quentin

(56) Documents cités:
- EP-A2- 2 482 021
- WO-A1-2016/051377
- DE-A1- 10 058 938
- DE-A1-102012 111 749
- DE-U1-202012 103 715

## Description

### DOMAINE TECHNIQUE DE L'INVENTION

La présente invention concerne les Systèmes de Stockage Thermique (SST) par Matériaux à Changement de Phase (MCP), et plus particulièrement, un dispositif de mesure permettant de mesurer l'état de charge du SST.

La présente invention concerne plus particulièrement un SST par MCP comprenant un réservoir destiné à contenir un MCP par fusion/solidification et un ciel de gaz au-dessus du MCP, et au moins un dispositif de mesure du taux de charge du SST.

Tous les SST dont le MCP présente une variation volumique consécutive à son changement d'état et dont le réservoir comprend un ciel de gaz sont susceptibles d'être concernés par l'invention.

La présente invention trouvera son application dans les réseaux de chaleur et/ou de froid, urbains, ruraux ou industriels ainsi que dans le stockage de l'énergie solaire. L'invention pourra également trouver des applications dans l'habitat, le transport thermique hors réseaux (camions, bateaux...) et le management thermique de systèmes embarqués.

### ÉTAT DE LA TECHNIQUE

Il existe plusieurs dispositifs de mesure permettant d'évaluer le niveau de charge d'un SST par MCP en exploitant et interprétant le même phénomène physique, à savoir la variation volumique du MCP lors de son changement d'état, cette variation volumique étant inhérente à une différence entre une masse volumique du MCP en phase liquide et une masse volumique du MCP en phase solide.

A titre d'exemple, parmi ces dispositifs de mesure, celui décrit dans la publication de G. Steinmaurer *et al.* du laboratoire autrichien ASiC, intitulée « Development of sensors for meausring the enthalpy of PCM storage systems », suggère de mesurer la variation de pression dans le ciel de gaz, cette variation étant inhérente à une variation volumique du MCP dans le réservoir du SST.

Un dispositif de mesure plus élaboré est décrit dans le document EP 2 482 021 A2 qui propose d'évaluer le niveau de charge du SST en mesurant l'évolution de la pression statique du ciel de gaz après un balayage forcé en pression. Chaque balayage consiste à injecter, dans le réservoir du SST grâce à une pompe, une même quantité de gaz et à mesurer la pression statique du ciel de gaz obtenue en réponse à cette injection. Cette mesure sera différente suivant le volume du ciel de gaz avant injection ; or ce volume est conditionné par la fraction entre le volume de MCP en phase liquide et le volume de MCP en phase solide au sein du réservoir et donc par l'état de charge du SST.

En pratique, une étanchéité suffisante du réservoir est requise, pour que la pression mesurée par le manomètre, et donc directement l'interprétation du niveau de charge, ne soit pas affectée par un niveau trop significatif de fuite de gaz. Il est donc nécessaire d'apporter un soin particulier à la conception et à la réalisation des soudures et des assemblages mécaniques du réservoir, et en particulier de sa partie confinant le ciel de gaz, cette partie étant en sus souvent instrumentée.

Un autre problème, lié au précédent, concerne la montée en pression du ciel de gaz consécutivement à un changement de phase du MCP. A titre d'exemple, pour un SST pourvu d'une calandre close de 3 m de haut, contenant un ciel de gaz d'une hauteur de 100 mm et exploitant un MCP qui présente une expansion volumique de 15 % lors de son changement de phase, la pression dans le ciel de gaz pourra s'élever à 4 bar. Le SST, et plus particulièrement son réservoir, doit donc être dimensionné, conçu et qualifié pour supporter des montées en pression significatives.

Enfin, ces méthodes ne sont, par définition, applicable qu'aux MCP présentant une variation volumique suffisante lors du changement de phase, ce qui correspond toutefois à la majorité d'entre eux.

L'objet de l'invention est de répondre, au moins en partie, aux limitations précédemment exposées. L'objet de l'invention est plus particulièrement de fournir un SST par MCP qui intègre un dispositif de mesure du taux de charge du SST qui réponde, au moins en partie, aux limitations précédemment exposées.

### RÉSUMÉ DE L'INVENTION

Pour atteindre cet objectif, la présente invention prévoit un Système de Stockage Thermique (SST) conforme au préambule donné ci-dessus dont le dispositif de mesure comprend au moins un premier capteur configuré pour délivrer un signal de mesure d'un paramètre relatif à une circulation de gaz entre un premier volume comprenant le ciel de gaz et un deuxième volume clos ou non, la circulation de gaz étant consécutive à une variation volumique du MCP dans le réservoir, et le cas échéant uniquement à une telle variation. Dès lors, le paramètre mesuré est représentatif du taux de charge du SST.

La circulation de gaz est consécutive, le cas échéant uniquement, aux contraintes de compression ou de détente auxquelles le ciel de gaz est soumis, du fait de l'expansion ou de la contraction volumique du MCP, respectivement. Un dispositif de circulation forcée ou d'injection de gaz n'est pas requis.

Si le ciel de gaz était clos, une augmentation du volume du MCP contenu dans le réservoir, du fait d'un changement d'état, conduirait à une compression du volume du ciel de gaz ; ici, cette augmentation conduit effectivement à une circulation de gaz depuis le premier volume vers le deuxième volume. A l'inverse, si le ciel de gaz était clos, une diminution du volume du MCP contenu dans le réservoir, du fait d'un autre changement d'état, conduirait à une dépression du ciel de gaz ; ici, cette diminution conduit effectivement à une circulation de gaz depuis le deuxième volume vers le premier volume.

Ainsi, le SST par MCP tel qu'introduit ci-dessus comprend un dispositif de mesure du taux de charge exploitant la variation volumique du MCP lors de son changement d'état d'une façon alternative aux dispositifs de mesure selon l'art antérieur.

En effet, le SST par MCP tel qu'introduit ci-dessus comprend un dispositif de mesure qui ne fonctionne pas de la même manière que les dispositifs de mesure de l'art antérieur, puisque la mesure du taux de charge du SST repose ici sur la mesure d'un paramètre relatif à une circulation de gaz entre le ciel de gaz et un autre volume, sous la contrainte exercée par la variation volumique du MCP lors de son changement d'état.

Le SST par MCP tel qu'introduit ci-dessus permet également de s'affranchir de la nécessité de concevoir un réservoir à l'épreuve de variations de pression significatives du ciel de gaz.

Au moins lorsque le volume occupé par le MCP dans le réservoir ne varie pas, la pression statique dans le premier volume est sensiblement égale à la pression statique dans le deuxième volume.

De manière facultative, l'invention peut en outre présenter au moins l'une quelconque des caractéristiques suivantes :
- ledit au moins un premier capteur comprend au moins l'un parmi un débitmètre configuré entre les premier et deuxième volumes et un anémomètre configuré dans un passage de section déterminée entre les premier et deuxième volumes ; le paramètre relatif à la circulation de gaz entre les premier et deuxième volumes comprend respectivement au moins l'un parmi : un débit de gaz entre les premier et deuxième volumes et une vitesse de circulation de gaz entre les premier et deuxième volumes ; et
- le dispositif de mesure comprend en outre des moyens de traitement, tel qu'un régulateur PID (pour « Proportionnel, Intégrateur, Dérivateur » ou « Proportionnel, Intégral, Dérivée »), d'au moins un signal de mesure ; les moyens de traitement sont configurés pour convertir ledit au moins un signal de mesure en une donnée représentative de l'état de charge du SST ; ledit au moins un signal de mesure comprend au moins le signal de mesure du paramètre relatif à la circulation de gaz entre les premier et deuxième volumes. De préférence, le traitement dudit au moins un signal de mesure par les moyens de traitement comprend la détermination, au moins en fonction du signal de mesure du paramètre relatif à la circulation de gaz entre les premier et deuxième volumes, d'au moins une donnée représentative de l'état de charge du SST choisie parmi une puissance de charge du SST, une puissance de décharge du SST, une énergie stockée par le SST et une quantité de gaz dans le ciel de gaz ; la puissance de charge ou de décharge du SST est proportionnelle au signal de mesure du paramètre relatif à la circulation de gaz entre les premier et deuxième volumes ; l'énergie stockée et la quantité de gaz dans le ciel de gaz sont proportionnelles à une intégrale temporelle du signal de mesure du paramètre relatif à la circulation de gaz entre les premier et deuxième volumes.

Les autres objets, caractéristiques et avantages de la présente invention apparaîtront à l'examen de la description suivante et des dessins d'accompagnement. Il est entendu que d'autres avantages peuvent être incorporés.

### BRÈVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La FIGURE 1 représente un SST par MCP selon un premier mode de réalisation de l'invention ;
La FIGURE 2 représente un SST par MCP selon un deuxième mode de réalisation de l'invention ;
Les FIGURES 3 et 4 représentent un SST par MCP selon un troisième mode de réalisation de l'invention, ainsi que son fonctionnement.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée des modes de réalisation de l'invention, sont énoncées ci-après des caractéristiques optionnelles qui peuvent éventuellement être utilisées en association ou alternativement :
- le dispositif de mesure peut comprendre en outre au moins un deuxième capteur, tel qu'un capteur à thermocouple, configuré pour délivrer un signal de mesure d'une température du gaz destiné à circuler entre les premier et deuxième volumes ; la détermination d'au moins une donnée représentative de l'état de charge du SST peut en outre être fonction du signal de mesure de la température du gaz destiné à circuler entre les premier et deuxième volumes ; le deuxième capteur est par exemple agencé dans une portion du volume du réservoir destinée à contenir le ciel de gaz ;
- le deuxième volume est un espace ouvert, tel que l'atmosphère. En alternative, le deuxième volume est un espace clos comprenant par exemple un vase d'expansion à pression constante et/ou à pression variable ; il est dès lors possible de conserver un inertage constant du MCP.

Selon une première variante, ledit au moins un premier capteur comprend un capteur propre à permettre une mesure du paramètre relatif à la circulation de gaz entre les premier et deuxième volumes selon les deux sens de circulation.

Selon une deuxième variante, le dispositif de mesure comprend deux premiers capteurs ; chacun des deux premiers capteurs est propre à permettre une mesure du paramètre relatif à la circulation de gaz entre le premier volume et le deuxième volume correspondant selon un unique sens de circulation ; le cas échéant, le deuxième volume défini par un des deux premiers capteurs est joint au deuxième volume défini par l'autre des deux premiers capteurs ; chaque premier volume défini par un des deux premiers capteurs comprend le ciel de gaz, de sorte que les deux premiers capteurs ne définissent qu'un seul et même premier volume. Selon cette deuxième variante, le dispositif de mesure comprend en outre deux clapets configurés pour permettre la circulation de gaz selon un unique sens de circulation ; un premier des deux premiers capteurs est agencé pour mesurer un paramètre relatif à la circulation de gaz depuis le premier volume jusqu'au deuxième volume correspondant et un second des deux premiers capteurs est agencé pour mesurer un paramètre relatif à la circulation de gaz depuis le deuxième volume correspondant jusqu'au premier volume ; un premier des deux clapets peut être agencé conjointement avec le premier des deux premiers capteurs pour permettre la circulation de gaz depuis le premier volume jusqu'au deuxième volume correspondant et un second des deux clapets peut être agencé conjointement avec le second des deux premiers capteurs pour permettre la circulation de gaz depuis le deuxième volume correspondant jusqu'au premier volume.

Le dispositif de mesure peut comprendre en outre au moins un conduit fluidique configuré conjointement avec un premier capteur pour canaliser la circulation de gaz entre le premier volume et le deuxième volume correspondant. Il est ainsi permis de déporter tout ou partie du dispositif de mesure par rapport au réservoir du SST.

Selon un deuxième mode de réalisation, en complément ou en substitution du premier mode de réalisation, le dispositif de mesure comprend en outre une membrane souple et étanche configurée conjointement avec au moins un premier capteur et définissant au moins en partie un volume clos comprenant au moins le deuxième volume correspondant ; la souplesse et l'étanchéité de la membrane sont telles qu'une circulation de gaz depuis le premier volume jusqu'au deuxième volume correspondant permet de gonfler la membrane et une circulation de gaz depuis le deuxième volume correspondant jusqu'au premier volume permet de dégonfler la membrane.

Selon une particularité du deuxième mode de réalisation, le dispositif de mesure comprend en outre un récipient destiné à contenir un fluide incompressible dans lequel la membrane est destinée à être noyée au moins partiellement ; le récipient est de préférence couplé avec un indicateur de niveau du fluide incompressible dans le récipient, de sorte que le niveau indiqué par l'indicateur de niveau varie en fonction de la quantité de gaz dans au moins le deuxième volume correspondant et par voie de conséquence soit représentatif du taux de charge du SST.

On entend par 'haut' et 'bas', ou leurs dérivés, une qualité de positionnement relatif d'un élément du SST 100 lorsque celui-ci est installé de façon fonctionnelle, le 'haut' étant orienté à l'opposé du sol et le 'bas étant orienté vers le sol.

On entend par « débit » de gaz, le débit volumique de gaz qui s'exprime en m³/s, étant entendu qu'il est possible de convertir le débit volumique en débit massique qui s'exprime en kg/s, le lien entre ces deux expressions du débit étant souvent réductible à un coefficient de proportionnalité égal à la densité massique p, qui s'exprime en kg/m³, du gaz considéré.

En préambule, il convient de rappeler le fonctionnement d'un système de stockage thermique (SST) exploitant la chaleur latente d'un matériau à changement de phase (MCP) dans lequel s'intègre le dispositif de mesure détaillé plus bas.

De manière générale, un SST par MCP est constitué d'un réservoir dans lequel un fluide caloporteur échange sa chaleur avec le MCP. Si dans la majorité des cas, ce transfert thermique s'effectue sans contact direct entre le fluide caloporteur et le MCP, à l'instar du fonctionnement d'un échangeur thermique, il existe quelques systèmes anecdotiques dans lesquels le fluide et le MCP, non miscibles ensemble, échangent leurs calories par contact direct. Etant plus communément rencontré, la présente description de l'invention se concentre sur un SST dans lequel le fluide caloporteur et le MCP échangent leurs chaleurs sans contact direct. Dans cette configuration, deux agencements sont possibles :
- soit le MCP est contenu dans une calandre et est en contact avec un échangeur thermique dans lequel circule le fluide caloporteur (ce cas est celui illustré par les figures),
- soit le MCP est confiné dans des espaces clos (i.e. encapsulé pour former des nodules, briques, boules,...) formés par des parois conductrices thermiquement, qui baignent à l'intérieur d'une calandre dans laquelle circule le fluide caloporteur.

Quel que soit la configuration, le fonctionnement d'un SST exploitant la chaleur latente d'un MCP repose sur le même principe physique, à savoir la valorisation de l'énergie thermique caractéristique de l'enthalpie de changement d'état du MCP. Dans la majorité des cas, c'est la réaction réversible et isotherme de fusion/solidification qui est valorisée dans le stockage de chaleur latente.

Cette réaction réversible se distingue par deux phases:
- une phase dite de « charge », durant laquelle la chaleur du fluide caloporteur est transmise au MCP pour le faire fondre. Dans ce cas, la température du fluide caloporteur est supérieure à la température de fusion du MCP contenu dans le réservoir du SST ; et
- une phase dite de « décharge » durant laquelle la chaleur est prélevée par le fluide caloporteur au MCP, entraînant la solidification de celui-ci. Dans ce cas, la température du fluide caloporteur est inférieure à la température de solidification du MCP contenu dans le réservoir du SST.

Dans un SST, la chaleur sensible du MCP et même du système complet (matériaux structurants, fluide caloporteur,...) peut également être exploitée à la charge comme à la décharge. La quantité d'énergie thermique stockée en sensible est directement proportionnelle à la différence de température entre celle du SST et celle du changement d'état du MCP, à la chaleur spécifique du ou des matériaux structurants et à leurs masses. De ce fait, elle peut être quantifiée à partir de l'intégration d'une mesure de température obtenue par un capteur de température, tel qu'un thermocouple, une sonde platine ou tout autre moyen de mesure de température. La quantité d'énergie sensible stockée peut donc être évaluée à l'aide d'un capteur de température, contrairement à la quantité d'énergie latente stockée.

Rappelons également que le changement d'état d'un MCP conduit également à une variation de sa masse volumique (ou densité, en kg/m³ suivant le SI). Si la majorité des MCP voient leurs masses volumiques augmenter lors de leur changement d'état du liquide vers le solide, certains MCP font exceptions comme l'eau et se démarquent par le phénomène inverse.

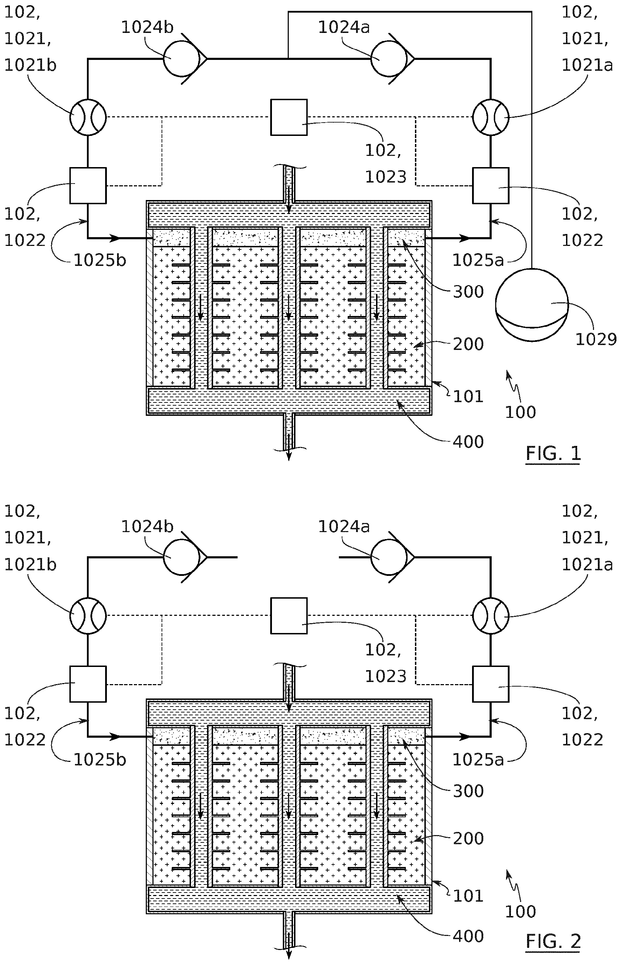

Chacune des figures 1 à 4 illustre schématiquement une coupe verticale d'un SST 100 par MCP 200 du type à « tubes et calandre » qui comprend un réservoir 101 destiné à contenir un MCP 200 et un ciel de gaz 300, un fluide caloporteur 400 étant destiné à circuler dans les tubes pour échanger de la chaleur avec le MCP via les parois des tubes. Comme illustré, chaque tube peut comprendre des ailettes s'étendant radialement depuis une partie tubulaire du tube pour augmenter la surface d'échange thermique entre fluide caloporteur 400 et MCP 200.

Toutefois, l'invention n'est pas limitée à ce type particulier de SST. Tout SST par MCP comprenant un réservoir destiné à contenir un ciel de gaz est concerné par la présente invention. Ainsi, un SST par MCP dans lequel le fluide et le MCP, non miscibles ensemble, échangent leurs calories par contact direct est concerné par l'intégration d'un dispositif de mesure tel que décrit plus bas. De même, un SST dont le MCP est confiné dans des espaces clos, tels que des nodules, formés par des parois conductrices thermiquement, qui baignent à l'intérieur d'une calandre dans laquelle circule le fluide caloporteur, peut être concerné, notamment dans la mesure où chaque espace clos ou du moins une partie d'entre eux a un volume qui évolue conjointement avec le volume du MCP qu'il contient.

La présente invention repose sur l'exploitation et l'interprétation de la variation volumique du MCP, consécutive à son changement d'état, pour évaluer le niveau de charge du SST 100. Le MCP 200 présente donc une variation volumique non nulle en changeant de phase. Ceci est le cas pour la plupart, voire la totalité, des MCP connus. Le MCP 200 destiné à être contenu dans le réservoir 101 peut effectivement présenter une variation volumique lors du changement de phase comprise entre 10 % et 20 %, de préférence supérieure à 5 %.

Sans y être limité, le MCP 200 destiné à être contenu dans le réservoir 101 peut comprendre au moins l'un parmi : de l'eau, une paraffine, un sel, tel que l'acétate de sodium trihydraté, un hydrate de sel, tel que le nitrate de magnésium hexahydraté, un alcool de sucre, tel que le xylitol, et leur mélange, avec ou sans additif tensio-actif. Un tel mélange peut être un eutectique défini comme un mélange de deux corps purs qui fond et se solidifie à température constante ; un eutectique se comporte en fait comme un corps pur du point de vue de la fusion.

Tel qu'illustré sur les figures 1 à 4, un fluide caloporteur 400, par exemple de l'eau, est destiné à pénétrer dans le réservoir 101 par un collecteur supérieur, à s'y écouler dans les tubes, et à en sortir par un collecteur bas. Toutefois, l'invention n'est pas limitée à cette circulation particulière. A titre d'exemple, le fluide caloporteur 400 pourrait pénétrer dans le réservoir 101 par le collecteur bas et en sortir par le collecteur haut.

Le dispositif de mesure 102 du SST 100 par MCP 200 selon l'invention va maintenant être décrit.

Ce dispositif de mesure 102 repose sur la mesure et l'interprétation d'un paramètre (ou composante physique) relatif à une circulation de gaz (par évacuation et/ou aspiration) entre un volumes clos, comprenant le ciel de gaz 300 contenu dans la calandre 101 et un second volume clos ou non, qui peut comprendre respectivement soit un vase d'expansion 1029 intégré ou déporté du SST 100, soit l'atmosphère. Le dispositif de mesure 102 comprend au moins un premier capteur 1021 configuré pour délivrer un signal de mesure de ce paramètre.

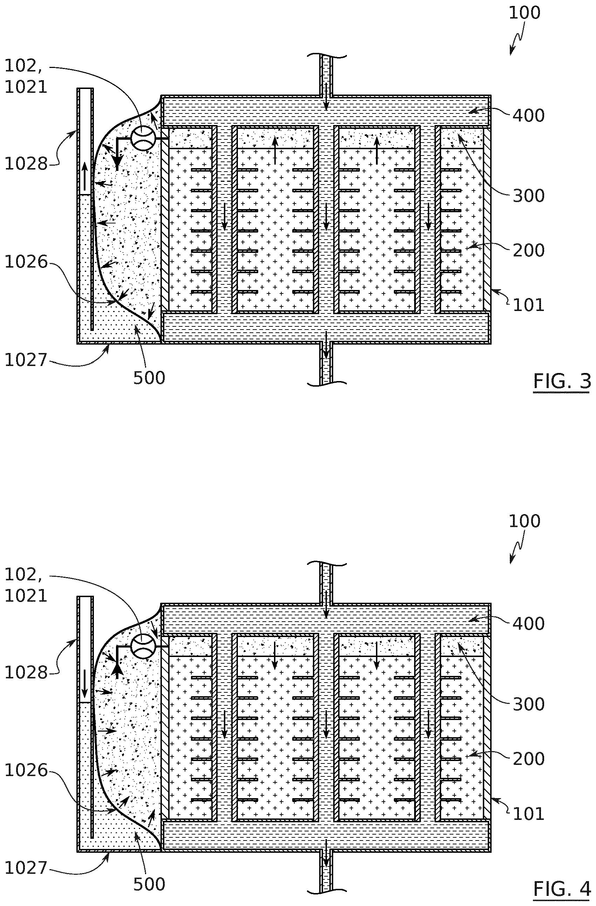

La circulation de ce gaz est consécutive aux contraintes de compression ou de détente auxquelles le ciel de gaz 300 est soumis, lors de l'expansion ou de la contraction volumique du MCP 200, inhérente à son changement d'état, respectivement. A titre d'exemple, et comme illustré sur les figures 3 et 4, l'augmentation de la hauteur du MCP 200 lors de son changement d'état conduit à une compression du ciel de gaz 300 et donc à la circulation de gaz vers le second volume clos ou vers l'atmosphère ; à l'inverse, la diminution de la hauteur du MCP 200 lors de son changement d'état conduit à une dépression du ciel de gaz 300 et donc à la circulation de gaz vers le ciel de gaz depuis le second volume clos ou depuis l'atmosphère.

Le paramètre mesuré est directement ou indirectement proportionnel à l'état de charge du SST 100. Plus particulièrement, le paramètre mesuré consiste par exemple soit en un débit de gaz entre les premier et deuxième volumes, soit en une vitesse de circulation de gaz entre les premier et deuxième volumes. Le débit de gaz étant directement proportionnel à la vitesse de circulation de gaz que multiplie la section du passage dans lequel la vitesse est mesurée, la mesure de la vitesse de circulation de gaz permet de calculer le débit de gaz correspondant. Ainsi, le débit de gaz et la vitesse de circulation de gaz sont directement proportionnels à la puissance de charge ou de décharge du SST 100, suivant le sens de circulation du gaz.

Dès lors, le premier capteur 1021 peut comprendre au moins l'un parmi un débitmètre configuré entre les premier et deuxième volumes et un anémomètre configuré dans un passage de section déterminée entre les premier et deuxième volumes.

L'intégrale en fonction du temps du débit de gaz entre premier et deuxième volumes conduit à déterminer une quantité de gaz encore disponible dans le réservoir 101 du SST 100 et donc la fraction entre phases du MCP contenu, i.e. le niveau de charge du SST.

Quantité et volume de gaz encore disponibles dans le réservoir 101 du SST 100 peuvent être liés par leur dépendance à la température du SST, et notamment à la température du ciel de gaz 300. Afin de pouvoir prendre en compte cette dépendance, il est envisagé que le dispositif de mesure 102 comprenne en outre au moins un deuxième capteur 1022 configuré pour délivrer un signal de mesure d'une température du gaz destiné à circuler entre les premier et deuxième volumes.

Le dispositif de mesure comprend en outre des moyens de traitement 1023, tel qu'un régulateur PID (pour « proportionnel, intégrateur, dérivateur » ou « proportionnel, intégral, dérivée »), d'au moins un signal de mesure. Les moyens de traitement 1023 du dispositif de mesure ne sont pas limités à cet exemple. Selon un autre exemple, les moyens de traitement comprennent un microcontrôleur.

Les moyens de traitement 1023 du dispositif de mesure 102 sont configurés pour convertir ledit au moins un signal de mesure en une donnée représentative de l'état de charge du SST 100. Ledit au moins un signal de mesure comprend au moins le signal de mesure du paramètre relatif à la circulation de gaz entre les premier et deuxième volumes, et le cas échéant le signal de mesure de la température du gaz destiné à circuler entre les premier et deuxième volumes. En effet, en vue de garantir une bonne précision de mesure, il peut être important d'intégrer, dans la chaîne d'acquisition, la mesure de température du gaz circulant entre les premier et deuxième volumes, pour tenir compte de l'évolution de la densité p de ce gaz en fonction de la température.

La donnée représentative de l'état de charge du SST 100 déterminée par les moyens de traitement peut être choisie parmi une puissance de charge du SST, une puissance de décharge du SST, une énergie stockée par le SST et une quantité de gaz dans le ciel de gaz 300. L'énergie stockée par le SST et la quantité de gaz dans le ciel de gaz 300 peuvent être déterminées par les moyens de traitement 1023 du dispositif de mesure 102 en intégrant, dans le temps, la vitesse de circulation de gaz entre les premier et deuxième volumes, le débit de gaz entre les premier et deuxième volumes ou la puissance de charge et de décharge du SST 100.

Un premier mode de réalisation de l'invention est décrit ci-dessous en référence à la figure 1.

Comme illustré sur la figure 1, le gaz est destiné à circuler entre deux volumes clos, qui comprennent respectivement le ciel de gaz 300 de la calandre 101 et le ballon ou vase d'expansion 1029 du dispositif de mesure 102. Le vase d'expansion 1029 est déporté du SST 100. Deux circuits fluidiques matérialisés par les deux conduits fluidiques 1025a et 1025b sont dissociés pour mesurer distinctement le débit de gaz extrait depuis le ciel de gaz 300 de la calandre 101 vers le vase d'expansion 1029 du débit de gaz aspiré depuis le vase d'expansion 1029 vers le ciel de gaz 300 de la calandre 101. L'arbitrage entre les deux circuits fluidiques en fonction du sens de circulation du gaz est opéré par deux clapets 1024a, 1024b, par exemple deux clapets anti-retour, montés de sorte à fonctionner de manière antagoniste. Plus particulièrement, un clapet est agencé sur chaque conduit fluidique. La mesure du débit de gaz est effectuée par deux débitmètres 1021a, 1021b. Plus particulièrement, chaque débitmètre est agencé sur un conduit fluidique et positionné entre le clapet et la connexion au ciel de gaz 300 de la calandre 101. En aval du clapet 1024a et en amont du clapet 1024b, les deux conduits fluidiques 1025a et 1025b peuvent confluer en un seul conduit, avant de rejoindre le vase d'expansion 1029.

Le vase d'expansion 1029 permet au gaz de circuler en vase clos. Il est dès lors possible de conserver constamment un inertage, notamment chimique, du MCP 200. Le vase d'expansion peut en outre être à pression constante ou à pression variable, ce qui permet de contrôler la pressurisation du SST 100 ou d'éviter le cas échéant toute montée en pression du SST 100.

Le débit est mesuré et intégré en fonction du temps par les moyens de traitement 1023 agencés pour traiter les signaux de mesure délivrés, par exemple successivement, par les deux débitmètres 1021a, 1021b et pour permettre de déterminer par exemple d'une part la puissance de charge ou de décharge (en joules par seconde) et d'autre part la quantité de gaz présente dans le premier volume ou équivalemment dans le ciel de gaz 300 de la calandre 101.

En outre, un capteur de température 1022 peut être agencé sur chaque conduit fluidique et positionné par exemple entre le débitmètre et une connexion au ciel de gaz 300 de la calandre 101, de la façon illustrée sur la figure 1. Selon une variante préférée, un seul capteur de température 1022 est agencé dans la partie de la calandre 101 destinée à contenir le ciel de gaz 300.

Comme illustré, chaque capteur 1021a, 1021b, 1022 est relié aux moyens de traitement 1023 par une liaison filaire. Toutefois, il est également envisageable que la communication de chaque signal de mesure ou de certains d'entre eux soit réalisée par une liaison non filaire, par exemple par une liaison radiofréquence.

Ce mode de réalisation est particulièrement adapté à l'utilisation d'un MCP 200 qui nécessite d'être protégé de l'air ambiant, et notamment de ces éventuelles réactions chimiques avec certains composants de l'air ambiant. En effet, le ciel de gaz 300 est alors confiné dans le SST 100 et peut être composé d'un gaz inerte afin d'éviter d'éventuelles interactions entre le MCP 200 et l'air ambiant qui pourraient dégrader les propriétés du MCP.

Le deuxième mode de réalisation illustré par la figure 2 est en tout point conforme à celui illustré par la figure 1, à l'exception que les deux conduits fluidiques 1025a, 1025b ne confluent plus pour ne former qu'un seul circuit fluidique rejoignant un vase d'expansion, mais sont interrompus en aval du clapet 1024a et en amont du clapet 1024b respectivement, pour s'ouvrir sur l'atmosphère. Les deux conduits fluidiques 1025a, 1025b pourraient également confluer pour s'ouvrir sur l'atmosphère par une seule et même ouverture.

Ce mode de réalisation est particulièrement adapté à l'utilisation d'un MCP 200 qui ne nécessite pas d'être protégé de l'air ambiant. Le ciel de gaz 300 peut alors comprendre de l'air ambiant. Dans ce cas, le SST 100 est simplifié, car il est possible de s'affranchir de l'utilisation d'un ballon d'expansion et d'un circuit étanche en aval du clapet 1024a et en amont du clapet 1024b.

Les premier et deuxième modes de réalisation sont particulièrement adaptés à l'utilisation de débitmètres fonctionnant dans un seul sens de circulation de gaz, ce qui est le cas de bon nombre de débitmètres connus.

Dans l'hypothèse de l'utilisation d'un débitmètre pouvant fonctionner dans les deux sens de circulation de gaz, la configuration du SST et plus particulièrement de son dispositif de mesure 102 pourrait être simplifiée et réduite pour comprendre un seul débitmètre connecté d'un côté au ciel de gaz 300 de la calandre 101 et de l'autre côté au vase d'expansion 1029 ou à l'atmosphère suivant le MCP 200 utilisé. Dans ce cas, le SST 100 est simplifié, car il est possible de s'affranchir de l'utilisation de clapets. Les mêmes avantages sont aisément atteignables en considérant l'utilisation d'un seul anémomètre qui sont, plus souvent que les débitmètres, propres à fonctionner dans les deux sens de circulation de gaz.

Un troisième mode de réalisation de l'invention est décrit ci-dessous en référence aux figures 3 et 4.

La figure 3 représente schématiquement un SST 100 par MCP 200 selon ce troisième mode de réalisation, lorsque le SST 100 est en charge.

Comme illustré sur la figure 3, lors de la charge du SST 100, l'expansion volumique du MCP 200, inhérente à son changement d'état progressif (par exemple passage à l'état liquide pour les paraffines ou passage à l'état solide pour l'eau), comprime le gaz contenu dans la calandre 101 et se trouvant dans le ciel de gaz 300. Sous l'effet de cette compression, le gaz est évacué de la calandre 101 par l'intermédiaire d'un canal assurant la liaison entre le ciel de gaz 300 contenu dans la calandre 101 et un volume défini au moins en partie par une membrane 1026 souple et étanche. La souplesse et l'étanchéité de la membrane 1026 sont telles que la membrane est apte à se gonfler sous l'action du gaz évacué depuis la calandre 101. Par exemple, la membrane 1026 entoure au moins en partie la calandre 101 et est liée à elle par ses bords de façon étanche. Par un autre exemple, la membrane forme un ballon, tel qu'un ballon de baudruche, dont une embouchure est fixée de façon étanche à une ouverture du canal.

Le volume formé au moins en partie par la membrane 1026 se remplit alors de gaz au fur et à mesure que la quantité de MCP se dilate proportionnellement à son taux de changement d'état. L'évaluation de la puissance de charge du SST 100 peut être réalisée par l'interprétation des mesures effectuées par un débitmètre positionné de sorte à mesurer le débit de gaz traversant le canal. Il est dès lors possible d'évaluer l'énergie qui est disponible dans le SST 100 et donc le niveau de charge de celui-ci.

La figure 4 représente schématiquement un SST 100 par MCP 200 selon ce troisième mode de réalisation, lorsque le SST 100 est en décharge.

Comme illustré sur la figure 4, lors de la décharge, le MCP 200 contenu dans le moyen de stockage restitue sa chaleur en subissant le changement de phase inverse à celui de la charge (en passant par exemple de l'état liquide à l'état solide pour les paraffines ou en passant de l'état solide à l'état liquide pour l'eau). Ce changement d'état entraîne une diminution volumique du MCP 200 contenu dans la calandre 101 qui conduit à mettre en dépression le ciel de gaz 300. Le gaz contenu dans le volume formé au moins en partie par la membrane 1026 est alors aspiré dans le ciel de gaz 300 dont le volume augmente. La souplesse et l'étanchéité de la membrane 1026 sont telles que la membrane est apte à se dégonfler sous l'action du gaz aspiré depuis le volume formé au moins en partie par la membrane 1026. Lors de cette phase de décharge, le gaz parcourt le chemin inverse parcouru précédemment lors de la charge. Le débit de gaz traversant à nouveau le canal est mesuré par le débitmètre et réintégré, comme au moment de la charge, pour évaluer la quantité d'énergie cette fois-ci déchargée par le SST 100 et sa puissance instantanée de décharge. Il est à noter que le SST 100 par MCP 200 selon ce troisième mode de réalisation bénéficie d'une isolation thermique améliorée au moins par la présence du volume formé au moins en partie par la membrane 1026.

La membrane 1026 peut comprendre par exemple de l'Hypalon®, du PVC (chlorure de polyvinyle) ou du PU (polyuréthane).

Selon le mode de réalisation illustré sur les figures 3 et 4, un seul débitmètre est utilisé qui est donc implicitement un débitmètre pouvant fonctionner dans les deux sens de circulation de gaz. Toutefois, le troisième mode de réalisation de l'invention n'est pas limité à cette utilisation et l'utilisation de deux débitmètres fonctionnant chacun dans un sens de circulation opposé du gaz est envisagé. Par exemple, le dispositif de mesure 102 tel qu'illustré sur la figure 2 peut être compris dans le volume formé au moins en partie par la membrane 1026, les conduits fluidiques 1025a et 1025b seraient alors ouverts sur ce volume.

Un dispositif complémentaire peut être intégré au SST 100 selon son troisième mode de réalisation pour fournir une évaluation complémentaire ou en parallèle du niveau de charge du SST. De la même manière, ce dispositif complémentaire exploite la variation de contrainte de pression sur le gaz pour remonter à l'état de charge du SST 100. Ce dispositif complémentaire consiste à placer la membrane 1026 à l'intérieur d'un récipient 1027 confinant une quantité d'un fluide incompressible 500, tel que de l'eau. Ce récipient 1027 confinant le fluide incompressible 500 communique avec un indicateur de niveau 1028 qui peut être à la pression atmosphérique pour des questions pratiques. Cet indicateur de niveau est de préférence en mesure d'accueillir l'intégralité du volume du fluide incompressible 500 qui serait évacué, si la membrane 1026 occupait l'intégralité du volume du récipient 1027 le confinant. Cet indicateur de niveau 1028 peut être instrumenté et/ou directement visible depuis l'extérieur du SST 100. Lorsque la membrane 1026 se gonfle sous l'action de l'expansion volumique du MCP 200 qui conduit à la pressurisation du ciel de gaz 300, elle vient à pousser le fluide incompressible 500 dans l'indicateur de niveau 1028. En somme, plus la membrane 1026 se gonfle, plus elle évacue le fluide incompressible 500 dans l'indicateur de niveau. Dans cette configuration, l'indicateur de niveau indique l'énergie stockée ou le taux de charge du SST 100.

Quel que soit le mode de réalisation de l'invention, l'incertitude sur la mesure du taux de charge du SST 100 est directement proportionnelle à l'intervalle de temps séparant les mesures de débit et à la précision du débitmètre et éventuellement de la sonde de température. L'invention permet une mesure en continu du taux de charge du SST 100, et n'est pas limitée à une mesure par cycles dudit taux de charge.

Grâce à l'invention, il n'est pas nécessaire d'apporter un soin particulier à la conception et à la réalisation des soudures et des assemblages mécaniques du réservoir, et en particulier de sa partie confinant le ciel de gaz, cette partie étant en sus souvent instrumentée. Il suffit que le gaz contenu dans le réservoir circule de façon préférentielle entre les premier et deuxième volumes en passant par ledit au moins un premier capteur 1021. En outre, selon l'invention, le gaz contenu dans le réservoir 101 est par principe libre de circuler naturellement entre les premier et deuxième volumes, ce qui permet d'éviter une mise en pression ou en dépression du réservoir et ce qui permet d'éviter d'avoir nécessairement recours à des dispositifs de mise en circulation forcée ou d'injection, tels qu'une pompe par exemple.

Toutefois, l'invention concerne également un SST 100 par MCP 200, qui utilise un dispositif d'injection de gaz dans la calandre 101. Le gaz injecté peut être le même que celui présent dans le ciel de gaz 300 et est le cas échéant propre à favoriser la cristallisation du MCP 200. Dans ce mode de réalisation (non illustré sur les figures), le dispositif de mesure 102 et ses moyens de traitement 1023 sont configurés pour intégrer en dynamique des signaux de mesure de paramètres relatifs à la circulation de gaz, entrant et sortant de la calandre 101, au niveau de l'injection et entre les premier et deuxième volumes, pour fournir la donnée représentative de l'état de charge du SST 100.

Le dispositif de mesure 102 du niveau de charge d'un SST 100 par MCP 200 selon l'invention peut être intégré à tous SST exploitant la chaleur latente de MCP, qu'ils soient déployés sur des réseaux de chaleur, dans des procédés industriels, dans des centrales solaires à concentration ou encore pour assurer des fonctions de management thermique pour des systèmes embarqués.

L'invention n'est pas limitée aux modes de réalisations précédemment décrits et s'étend à tous les modes de réalisation couverts par les revendications.

Par exemple, le SST 100 par MCP 200 selon l'invention peut servir au stockage de calories aussi bien qu'au stockage de frigories selon la nature du MCP 200.

Par un autre exemple, la membrane 1026 et le récipient 1027 pourrait faire le tour de la calandre 101 du SST 100.

## Revendications

1. Système de Stockage Thermique (SST) (100) par Matériau à Changement de Phase (MCP) (200) comprenant :
- Un réservoir (101) destiné à contenir un MCP (200) et un ciel de gaz (300), et
- un dispositif de mesure (102) du taux de charge du SST (100) comprenant au moins un premier capteur (1021),
**caractérisé en ce que** le au moins un premier capteur (1021) est configuré pour délivrer un signal de mesure d'un paramètre relatif à une circulation de gaz entre un premier volume comprenant le ciel de gaz (300) et un deuxième volume, la circulation de gaz étant consécutive à une variation volumique du MCP (200) destiné à être contenu dans le réservoir (101), de sorte que le paramètre mesuré soit représentatif du taux de charge du SST (100).

2. SST selon la revendication précédente, dans lequel ledit au moins un premier capteur (1021) comprend au moins l'un parmi un débitmètre configuré entre les premier et deuxième volumes et un anémomètre configuré dans un passage de section déterminée entre les premier et deuxième volumes.

3. SST selon l'une quelconque des revendications précédentes, dans lequel le dispositif de mesure (102) comprend en outre au moins un deuxième capteur (1022) configuré pour délivrer un signal de mesure d'une température du gaz destiné à circuler entre les premier et deuxième volumes.

4. SST selon l'une quelconque des revendications précédentes, dans lequel le dispositif de mesure comprend en outre des moyens de traitement (1023) d'au moins un signal de mesure, les moyens de traitement étant configurés pour convertir ledit au moins un signal de mesure en une donnée représentative de l'état de charge du SST (100), ledit au moins un signal de mesure comprenant au moins le signal de mesure du paramètre relatif à la circulation de gaz entre premier et deuxième volumes.

5. SST selon la revendication précédente, dans lequel le traitement dudit au moins un signal de mesure par les moyens de traitement (1023) comprend la détermination, au moins en fonction du signal de mesure du paramètre relatif à la circulation de gaz entre les premier et deuxième volumes, d'au moins une donnée représentative de l'état de charge du SST (100) choisie parmi une puissance de charge du SST, une puissance de décharge du SST, une énergie stockée par le SST et une quantité de gaz dans le ciel de gaz (300).

6. SST selon les revendications 3 et 5, dans lequel la détermination d'au moins une donnée représentative de l'état de charge du SST (100) est en outre fonction du signal de mesure délivré par le deuxième capteur (1022).

7. SST selon l'une quelconque des revendications précédentes, dans lequel le deuxième volume est un espace ouvert.

8. SST selon l'une quelconque des revendications 1 à 6, dans lequel le deuxième volume est un espace clos.

9. SST selon l'une quelconque des revendications précédentes, dans lequel ledit au moins un premier capteur (1021) comprend un capteur propre à permettre une mesure du paramètre relatif à la circulation de gaz entre les premier et deuxième volumes selon deux sens de circulation.

10. SST selon l'une quelconque des revendications 1 à 8, dans lequel le dispositif de mesure (102) comprend :
- deux premiers capteurs (1021a, 1021b), chacun étant propre à permettre une mesure du paramètre relatif à la circulation de gaz entre le premier volume et le deuxième volume correspondant selon un unique sens de circulation, et
- deux clapets (1024a, 1024b) configurés pour permettre la circulation de gaz selon un unique sens de circulation,
un premier (1021a) des deux premiers capteurs étant configuré pour mesurer un paramètre relatif à la circulation de gaz depuis le premier volume jusqu'au deuxième volume correspondant et un second (1021b) des deux premiers capteurs étant agencé pour mesurer un paramètre relatif à la circulation de gaz depuis le deuxième volume correspondant jusqu'au premier volume, et
un premier (1024a) des deux clapets étant agencé conjointement avec le premier (1021a) des deux premiers capteurs pour permettre la circulation de gaz depuis le premier volume jusqu'au deuxième volume correspondant et un second (1024b) des deux clapets étant agencé conjointement avec le second (1021b) des deux premiers capteurs pour permettre la circulation de gaz depuis le deuxième volume correspondant jusqu'au premier volume.

11. SST selon l'une quelconque des revendications précédentes, dans lequel le dispositif de mesure (102) comprend en outre au moins un conduit fluidique (1025a, 1025b) configuré conjointement avec un premier capteur (1021a, 1021b) pour canaliser la circulation de gaz entre le premier volume et le deuxième volume correspondant.

12. SST selon l'une quelconque des revendications précédentes, dans lequel le dispositif de mesure comprend en outre une membrane (1026) souple et étanche configurée conjointement avec au moins un premier capteur (1021) et définissant au moins en partie un volume clos comprenant au moins le deuxième volume correspondant, de sorte qu'une circulation de gaz depuis le premier volume jusqu'au deuxième volume correspondant gonfle la membrane (1026) et/ou qu'une circulation de gaz depuis le deuxième volume correspondant jusqu'au premier volume dégonfle la membrane (1026).

13. SST selon la revendication précédente, dans lequel le dispositif de mesure comprend en outre un récipient (1027) destiné à contenir un fluide incompressible (500) dans lequel la membrane (1026) est destinée à être au moins partiellement immergée, le récipient (1027) étant couplé avec un indicateur de niveau (1028) du fluide incompressible (400) dans le récipient de sorte que le niveau indiqué par l'indicateur de niveau (1028) varie en fonction de la quantité de gaz dans au moins le deuxième volume correspondant et par voie de conséquence soit représentatif du taux de charge du SST (100).

## Patentansprüche

1. Wärmespeichersystem (WSS) (100) zum Speichern von Wärme durch Phasenwechselmaterial (PCM) (200), enthaltend:
- einen Speicherbehälter (101), der dazu bestimmt ist, ein PCM (200) und eine Gasglocke (300) zu enthalten, und
- eine Messvorrichtung (102) zum Messen des Ladezustands des WSS (100), die zumindest einen ersten Sensor (1021) aufweist,
**dadurch gekennzeichnet, dass** der zumindest eine erste Sensor (1021) dazu ausgelegt ist, ein Messsignal eines Parameters bezüglich einer Gasströmung zwischen einem ersten Raum, der die Gasglocke (300) enthält, und einem zweiten Raum auszugeben, wobei die Gasströmung auf eine Volumenänderung des PCM (200) erfolgt, das in dem Speicherbehälter (101) enthalten sein soll, so dass der gemessene Parameter repräsentativ ist für den Ladezustand des WSS (100).

2. WSS nach dem vorangehenden Anspruch, wobei der zumindest eine erste Sensor (1021) zumindest eines aus einem zwischen dem ersten und dem zweiten Raum ausgebildeten Durchflussmesser und einem Anemometer enthält, das in einem Durchlass mit bestimmtem Querschnitt zwischen dem ersten und dem zweiten Raum ausgebildet ist.

3. WSS nach einem der vorangehenden Ansprüche, wobei die Messvorrichtung (102) ferner zumindest einen zweiten Sensor (1022) enthält, der dazu ausgelegt ist, ein Messsignal einer Temperatur von dem Gas auszugeben, das zwischen dem ersten und dem zweiten Raum strömen soll.

4. WSS nach einem der vorangehenden Ansprüche, wobei die Messvorrichtung ferner Verarbeitungseinrichtungen (1023) zum Verarbeiten von zumindest einem Messsignal enthält, wobei die Verarbeitungseinrichtungen dazu ausgelegt sind, das zumindest eine Messsignal in eine Datenangabe umzuwandeln, die repräsentativ ist für den Ladezustand des WSS (100), wobei das zumindest eine Messsignal zumindest das Messsignal des Parameters bezüglich der Gasströmung zwischen dem ersten und dem zweiten Raum enthält.

5. WSS nach dem vorangehenden Anspruch, wobei das Verarbeiten des zumindest einen Messsignals durch die Verarbeitungseinrichtungen (1023) das Ermitteln von zumindest einer Datenangabe zumindest in Abhängigkeit von dem Messsignal des Parameters bezüglich der Gasströmung zwischen dem ersten und dem zweiten Raum umfasst, welche Datenangabe repräsentativ ist für den Ladezustand des WSS (100) und ausgewählt ist aus einer Ladeleistung des WSS, einer Entladeleistung des WSS, einer von dem WSS gespeicherten Energie und einer Menge an Gas in der Gasglocke (300).

6. WSS nach den Ansprüchen 3 und 5, wobei das Ermitteln von zumindest einer Datenangabe, die repräsentativ ist für den Ladezustand des WSS (100), ferner Funktion von dem vom zweiten Sensor (1022) ausgegebenen Messsignal ist.

7. WSS nach einem der vorangehenden Ansprüche, wobei der zweite Raum ein offener Raum ist.

8. WSS nach einem der Ansprüche 1 bis 6, wobei der zweite Raum ein geschlossener Raum ist.

9. WSS nach einem der vorangehenden Ansprüche, wobei der zumindest eine erste Sensor (1021) einen Sensor enthält, der dazu geeignet ist, eine Messung des Parameters bezüglich der Gasströmung zwischen dem ersten und dem zweiten Raum in zwei Strömungsrichtungen zu gestatten.

10. WSS nach einem der Ansprüche 1 bis 8, wobei die Messvorrichtung (102) enthält:
- zwei erste Sensoren (1021a, 1021b), die jeweils dazu geeignet sind, eine Messung des Parameters bezüglich der Gasströmung zwischen dem ersten und dem betreffenden zweiten Raum in einer einzigen Strömungsrichtung zu gestatten, und
- zwei Ventile (1024a, 1024b), die dazu ausgelegt sind, die Gasströmung in einer einzigen Strömungsrichtung zu gestatten,
wobei ein erster (1021a) der beiden ersten Sensoren dazu ausgelegt ist, einen Parameter bezüglich der Gasströmung von dem ersten Raum zum betreffenden zweiten Raum zu messen,
und ein zweiter (1021b) der beiden ersten Sensoren dazu vorgesehen ist, einen Parameter bezüglich der Gasströmung von dem betreffenden zweiten Raum zum ersten Raum zu messen, und
ein erstes (1024a) der beiden Ventile zusammen mit dem ersten (1021a) der beiden ersten Sensoren dazu vorgesehen ist, die Gasströmung von dem ersten Raum zum betreffenden zweiten Raum zu gestatten, und ein zweites (1024b) der beiden Ventile zusammen mit dem zweiten (1021b) der beiden ersten Sensoren dazu vorgesehen ist, die Gasströmung von dem betreffenden zweiten Raum zum ersten Raum zu gestatten.

11. WSS nach einem der vorangehenden Ansprüche, wobei die Messvorrichtung (102) ferner zumindest eine Strömungsleitung (1025a, 1025b) enthält, die zusammen mit einem ersten Sensor (1021a, 1021b) dazu ausgelegt ist, die Gasströmung zwischen dem ersten Raum und dem betreffenden zweiten Raum zu leiten.

12. WSS nach einem der vorangehenden Ansprüche, wobei die Messvorrichtung ferner eine nachgiebige und abgedichtete Membran (1026) enthält, die zusammen mit zumindest einem ersten Sensor (1021) ausgebildet ist und zumindest teilweise einen geschlossenen Raum definiert, der zumindest den betreffenden zweiten Raum umfasst, so dass eine Gasströmung von dem ersten Raum zum betreffenden zweiten Raum die Membran (1026) anschwellen lässt und/oder eine Gasströmung von dem betreffenden zweiten Raum zum ersten Raum die Membran (1026) abschwellen lässt.

13. WSS nach dem vorangehenden Anspruch, wobei die Messvorrichtung ferner einen Behälter (1027) enthält, der dazu bestimmt ist, ein inkompressibles Fluid (500) zu enthalten, in welches die Membran (1026) zumindest teilweise eintauchen soll, wobei der Behälter (1027) mit einem Pegelanzeiger (1028) für das inkompressible Fluid (400) in dem Behälter gekoppelt ist, so dass der von dem Pegelanzeiger (1028) angezeigte Pegel in Abhängigkeit von der Menge an Gas zumindest in dem betreffenden zweiten Raum variiert und folglich repräsentativ ist für den Ladezustand des WSS (100).

## Claims

1. Thermal Storage System (TSS) (100) by Phase Change Material (PCM) (200) comprising:
- a tank (101) intended to contain a PCM (200) and a gas sky (300), and
- a device for measuring (102) the charging rate of the TSS (100) comprising at least one first sensor (1021), **characterised in that** the at least one first sensor (1021) is configured to deliver a signal for measuring a parameter relative to a gas circulation between a first volume comprising the gas sky (300) and a second volume, the gas circulation being consecutive to a volume variation of the PCM (200) intended to be contained in the tank (101), such that the parameter measured is representative of the charging rate of the TSS (100).

2. TSS according to the preceding claim, wherein said at least one first sensor (1021) comprises at least one from among a flow sensor configured between the first and second volumes and an anemometer configured in a passage of a determined cross-section, between the first and second volumes.

3. TSS according to any one of the preceding claims, wherein the measuring device (102) further comprises at least one second sensor (1022) configured to deliver a signal for measuring a temperature of the gas intended to circulate between the first and second volumes.

4. TSS according to any one of the preceding claims, wherein the measuring device further comprises means for processing (1023) at least one measuring signal, the processing means being configured to convert said at least one measuring signal into an item of data, representative of the charge state of the TSS (100), said at least one measuring signal comprising at least the signal for measuring the parameter, relative to the gas circulation between the first and second volumes.

5. TSS according to the preceding claim, wherein the processing of said at least one measuring signal by the processing means (1023) comprises the determination, at least according to the signal for measuring the parameter relative to the gas circulation between the first and second volumes, of at least one item of data, representative of the charge state of the TSS (100) selected from among a charge power of the TSS, a discharge power of the TSS, an energy stored by the TSS and a gas quantity in the gas sky (300).

6. TSS according to claims 3 and 5, wherein the determination of at least one item of data, representative of the charge state of the TSS (100) is furthermore according to the measuring signal delivered by the second sensor (1022).

7. TSS according to any one of the preceding claims, wherein the second volume is an open space.

8. TSS according to any one of claims 1 to 6, wherein the second volume is a closed space.

9. TSS according to any one of the preceding claims, wherein said at least one first sensor (1021) comprises a sensor suitable to making it possible for a measurement of the parameter relative to the gas circulation between the first and second volumes according to two circulation directions.

10. TSS according to any one of claims 1 to 8, wherein the measuring device (102) comprises:
- two first sensors (1021a, 1021b), each being suitable to making it possible for a measurement of the parameter relative to the gas circulation between the first volume and the corresponding second volume along one single circulation direction, and
- two valves (1024a, 1024b) configured to make it possible for the gas circulation along one single circulation direction,
a first (1021a) of the two first sensors being configured to measure a parameter relative to the gas circulation from the first volume to the corresponding second volume and a second (1021b) of the two first sensors being arranged to measure a parameter relative to the gas circulation from the corresponding second volume to the first volume, and
a first (1024a) of the two valves being arranged jointly with the first (1021a) of the two first sensors to make it possible for the gas circulation from the first volume to the corresponding second volume and a second (1024b) of the two valves being arranged jointly with the second (1021b) of the two first sensors to make it possible for the gas circulation from the corresponding second volume to the first volume.

11. TSS according to any one of the preceding claims, wherein the measuring device (102) further comprises at least one fluidic conduit (1025a, 1025b) configured jointly with a first sensor (1021a, 1021b) to channel the gas circulation between the first volume and the corresponding second volume.

12. TSS according to any one of the preceding claims, wherein the measuring device further comprises a flexible and sealed membrane (1026) configured jointly with at least one first sensor (1021) and defining at least partially a closed volume comprising at least the corresponding second volume, such that a gas circulation from the first volume to the corresponding second volume inflates the membrane (1026) and/or a gas circulation from the corresponding second volume to the first volume deflates the membrane (1026).

13. TSS according to the preceding claim, wherein the measuring device further comprises a container (1027) intended to contain an incompressible fluid (500) wherein the membrane (1026) is intended to be at least partially immersed, the container (1027) being coupled with a level indicator (1028) of the incompressible fluid (400) in the container, such that the level indicated by the level indicator (1028) varies according to the gas quantity in at least the corresponding second volume and consequently, is representative of the charging rate of the TSS (100).
